# EUROPEAN PATENT APPLICATION

(11) **EP 4 600 383 A1**
(43) Date of publication of application: **13.08.2025**
(21) Application number: 22961445.8
(22) Date of filing: 06.10.2022
(51) Int. Cl.: C21D 8/10, C21D 9/08, C22C 38/00, C22C 38/60

(54) **SEAMLESS STEEL TUBE**

(71) Applicant: NIPPON STEEL CORPORATION, Chiyoda-ku Tokyo 100-8071 (JP)
(72) Inventor: NISHIMOTO, Takumi, Tokyo 100-8071 (JP); SATO, Haruka, Tokyo 100-8071 (JP); TOMIO, Akiko, Tokyo 100-8071 (JP); IMAMURA, Junko, Tokyo 100-8071 (JP); NAGASAWA, Makoto, Tokyo 100-8071 (JP)
(74) Representative: Zimmermann & Partner Patentanwälte mbB
(86) International application number: PCT/JP2022/037509
(87) International publication number: WO 2024/075258

(57) **Abstract**

A seamless steel pipe having an inner surface and an outer surface, having a chemical composition including, by mass, C: 0.06% or less, Si: 0.55% or less, Mn: 0.70-1.40%, P: 0.020% or less, S: 0.0005-0.020%, N: 0.005% or less, O: 0.0005-0.0035%, Cu: 0.25-0.45%, Ni: 0.50% or less, Mo: 0.20% or less, and Sb: 0.05-0.15%, with the balance being Fe and impurities, and having a metallographic structure including, by area%, ferrite: 90.0% or more, wherein the average crystal grain size of the ferrite in the inner surface layer of the pipe is 3.0-20.0 µm, and that in the outer surface layer of the pipe is 3.0-25.0 µm, and wherein the inner surface layer and the outer surface layer contain MnS and MnS-oxide, the number density of MnS is less than 100/mm², and the ratio of the number density of MnS-oxide relative to that of MnS is 0.10 or more.

## Description

### TECHNICAL FIELD

The present invention relates to a seamless steel pipe.

### BACKGROUND ART

Exhaust gas containing steam, sulfur oxides, hydrogen chloride, etc. is generated in boiler furnace and incinerator in waste incineration facility. When such exhaust gases are cooled in exhaust stacks, they condense into sulfuric acid and hydrochloric acid, causing significant corrosion of the steel pipe that make up the exhaust gas flow paths, known as sulfuric acid dew-point corrosion and hydrochloric acid dew-point corrosion.

To address such problems, a sulfuric acid and hydrochloric acid dew-point corrosion resistant steels and highly corrosion resistant stainless steels have been proposed. For example, in Patent Documents 1 to 4, steel materials with excellent resistance to sulfuric acid dew-point corrosion by adding Cu, Sb, Co, Cr, etc. are proposed. Also, in Patent Document 5, a highly corrosion resistant stainless steel with additions of Cr and Ni, etc. is proposed.

### LIST OF PRIOR ART DOCUMENTS

### PATENT DOCUMENT

Patent Document 1: JP2001-164335A
Patent Document 2: JP2003-213367A
Patent Document 3: JP2007-239094A
Patent Document 4: JP2012-57221A
Patent Document 5: JP7-316745A

### SUMMARY OF INVENTION

### TECHNICAL PROBLEM

By the way, in air preheater, gas-gas heater and the like in coal-fired power plant boiler, and air preheater/desulfurizer and the like in waste incineration facility, where seamless steel pipe is used, the outside of the pipe is exposed to exhaust gas containing moisture and further containing SOx, HCl, etc., and the inside of the pipe is exposed to hot boiler water. Steel materials containing Cu, Sb, etc. are also being applied to seamless steel pipe because of their excellent corrosion resistance. However, there is still room for further improvement in the corrosion resistance of seamless steel pipes used in the above environments.

An objective of the present invention is to solve the above problems and to provide a seamless steel pipe with excellent corrosion resistance in environments where the outer surface is exposed to sulfuric acid corrosion and the inner surface is exposed to high temperature water.

### SOLUTION TO PROBLEM

The present invention was made to solve the above problem, and the gist thereof includes the following seamless steel pipe.

(1) A seamless steel pipe having an inner surface and an outer surface; having a chemical composition containing, by mass%,
   C: 0.06% or less,
   Si: 0.55% or less,
   Mn: 0.70 to 1.40%,
   P: 0.020% or less,
   S: 0.0005 to 0.020%,
   N: 0.005% or less,
   O: 0.0005 to 0.0035%,
   Cu: 0.25 to 0.45%,
   Ni: 0.50% or less,
   Mo: 0.20% or less, and
   Sb: 0.05 to 0.15%,
   with the balance being Fe and impurities; and
   having a metallographic structure including, by area%,
   ferrite: 90% or more,
   wherein the ferrite has an average grain size of 3.0 to 20.0 µm in the inner surface layer of the pipe and has an average grain size of 3.0 to 25.0 µm in the outer surface layer of the pipe, and
   wherein:
      the inner surface layer of the pipe contains MnS and MnS-oxide, the number density of MnS having a maximum length of 2.0 µm or more is less than 100/mm², and the ratio of the number density of MnS-oxide having a maximum length of 2.0 µm or more to the number density of MnS having a maximum length of 2.0 µm or more is 0.10 or more; and
      the outer surface layer of the pipe contains MnS and MnS-oxide, the number density of MnS having a maximum length of 2.0 µm or more is less than 100/mm², and the ratio of the number density of MnS-oxide having a maximum length of 2.0 µm or more to the number density of MnS having a maximum length of 2.0 µm or more is 0.10 or more.
(2) The seamless steel pipe described in (1) above,
   wherein the chemical composition further contains, in lieu of a part of the Fe, one or more types selected from the group of, by mass%:
   Al: 0.050% or less,
   Cr: 0.70% or less,
   Nb: 0.100% or less,
   Ta: 0.100% or less,
   V: 0.100% or less,
   Ti: 0.100% or less,
   W: 1.00% or less,
   Ca: 0.0100% or less,
   Mg: 0.0100% or less,
   REM: 0.0100% or less,
   B: 0.0050% or less,
   Sn: 0.30% or less,
   Pb: 0.30% or less,
   Se: 0.100% or less,
   Te: 0.100% or less,
   Bi: 0.100% or less,
   Ag: 0.500% or less, and
   Pd: 0.100% or less.
(3) The seamless steel pipe described in (1) or (2) above,
   wherein, in the outer surface layer of the pipe, the number density of MnS having a maximum length of 2.0 µm or more is less than 50/mm², and the ratio of the number density of MnS-oxide having a maximum length of 2.0 µm or more to the number density of MnS having a maximum length of 2.0 µm or more is 0.50 or more.

### ADVANTAGEOUS EFFECT OF INVENTION

The present invention makes it possible to provide a seamless steel pipe with excellent corrosion resistance in environments where the outer surface is exposed to sulfuric acid corrosion environments and the inner surface is exposed to high temperature water.

### DESCRIPTION OF EMBODIMENTS

In order to solve the aforementioned problems, the present inventors investigated the corrosion resistance of seamless steel pipe in detail and have come to the following findings.

The present inventors investigated methods to improve the corrosion resistance of seamless steel pipe in an environment where the outer surface is exposed to a sulfuric acid corrosive environment and the inner surface is exposed to high temperature water.

In steel materials that exhibit corrosion resistance by containing Cu and Sb, the larger the grain size, the better the corrosion resistance. Therefore, it is necessary to control the grain size of the outer and inner surfaces of steel pipes depending on the environment to which they are exposed.

Mn is an essential element for ensuring the strength and toughness of steel pipes, but on the other hand, it forms MnS, which degrades the corrosion resistance in a corrosive environment. In the present invention, S, together with Cu and Sb, has an effect of improving corrosion resistance, so that an extreme reduction is not desirable.

Through previous research, the present inventors have found that MnS can be detoxified by refining it and combining it with oxygen to form MnS-oxide. Therefore, it is also important to control inclusions on the outer and inner surfaces of steel pipes, respectively, depending on the environment to which they are exposed.

However, unlike the case of manufacturing steel plates, when steel pipes are manufactured by hot working, a high temperature state is maintained due to the effects of processing heat and scale formation, especially on the inner surface side of the steel pipe, making it difficult to refine MnS.

As a result of further investigation, the present inventors have found that by using a scale modifier in a hot working process, it is possible to suppress processing heat and scale formation, refine MnS, and detoxify it by converting it to MnS-oxide, even on the inner surface of the steel pipe.

The present invention has been made based on the above findings. Each requirement of the invention is described in detail below.

### (A) Chemical Composition

The reasons for the limitation of each element are as follows. **In** the following explanation, "%" for content means "mass percent."

### C: 0.06% or less

Carbon (C) is unavoidably contained; that is, the C content is more than 0%. C increases the strength of steel, and even a small amount of C content can have this effect to some extent. However, if the C content exceeds 0.06%, the sulfuric acid corrosion resistance of the steel decreases even if the contents of other elements are within the range of the present embodiment. Therefore, the C content is 0.06% or less. An excessive reduction of the C content increases manufacturing costs. Therefore, when industrial production is considered, a preferred lower limit of the C content is 0.0001%, and even more preferably 0.0005%. If the strength of the steel is to be more effectively increased, a preferred lower limit of the C content is 0.001%, and even more preferably 0.01%. A preferred upper limit of the C content is 0.055%, and even more preferably 0.05%.

### Si: 0.55% or less

Silicon (Si) is unavoidably contained; that is, the Si content is more than 0%. Si deoxidizes steel. Si further increases the strength of steel by dissolving in ferrite. This effect is obtained to some extent, if even a small amount of Si is contained. However, if the Si content exceeds 0.55%, the weldability and toughness of the steel will decrease, even if the contents of other elements are within the range of the present embodiment. Therefore, the Si content is 0.55% or less. An excessive reduction of the Si content increases manufacturing costs. Therefore, when industrial production is considered, a preferred lower limit of the Si content is 0.0001%, and more preferably 0.0005%. When the strength of the steel is to be more effectively increased, a preferred lower limit of the Si content is 0.05%, more preferably 0.10%. A preferred upper limit of the Si content is 0.50%, more preferably 0.45%, and even more preferably 0.40%.

### Mn: 0.70 to 1.40%.

Manganese (Mn) increases the strength of steel. If the Mn content is less than 0.70%, sufficient strength cannot be obtained even if the contents of other elements are within the range of the present embodiment. On the other hand, if the Mn content exceeds 1.40%, the toughness of the steel decreases. In addition, coarse MnS is formed, resulting in deterioration of corrosion resistance and mechanical properties. Therefore, the Mn content is set at 0.70 to 1.40%. A preferred lower limit of the Mn content is 0.80%, more preferably 0.90%. A preferred upper limit of the Mn content is 1.35%, more preferably 1.30%, more preferably 1.25%, more preferably is 1.20%.

### P: 0.020% or less

Phosphorus (P) is an unavoidable impurity; that is, the P content is more than 0%. P segregates at grain boundaries and reduces the sulfuric acid corrosion resistance of the steel. If the P content exceeds 0.020%, sufficient sulfuric acid corrosion resistance cannot be obtained even if the contents of other elements are within the range of the present embodiment. Therefore, the P content is 0.020% or less. The P content is preferably as low as possible. However, an excessive reduction of the P content increases manufacturing costs. Therefore, when industrial production is considered, a preferred lower limit of the P content is 0.0001%, more preferably 0.0005%, and even more preferably 0.001%.

### S: 0.0005 to 0.020%.

Sulfur (S) is an unavoidable impurity. However, in the present invention, S has an effect of improving corrosion resistance in acid corrosive environments when contained simultaneously with Cu and Sb. Therefore, the S content is to be 0.0005% or more. On the other hand, S decreases the hot workability of steel; if the S content exceeds 0.020%, sufficient hot workability cannot be obtained even if the contents of other elements are within the range of the present embodiment. Therefore, the S content is 0.020% or less. A preferred lower limit of the S content is 0.001%, more preferably 0.005%. A preferred upper limit of the S content is 0.018%, more preferably 0.016%.

### N: 0.005% or less

N is an impurity that reduces the mechanical properties and productivity of steel, and hence the upper limit of the N content is set to 0.005% or less. The N content is preferably 0.004% or less. The N content can be 0%, but an extreme reduction leads to an increase in steelmaking costs. Therefore, the N content can be 0.001% or more. N also has an effect of contributing to the improvement of mechanical properties, etc. by precipitating as fine nitrides. To obtain this effect, the N content may be 0.002% or more.

### O: 0.0005 to 0.0035%.

O is an element that has an effect of detoxifying MnS by combining with MnS, thereby preventing deterioration of corrosion resistance and mechanical properties. However, when O is contained in excess, it produces coarse oxides that become the starting point of corrosion in acid corrosive environments. Therefore, the O content is set at 0.0005 to 0.0035%. The O content is preferably 0.0010% or more, and more preferably 0.0015% or more. The O content is preferably 0.0030% or less, and more preferably 0.0025% or less.

### Cu: 0.25 to 0.45%.

Copper (Cu) enhances the sulfuric acid corrosion resistance of the steel. If the Cu content is less than 0.25%, sufficient sulfuric acid corrosion resistance cannot be obtained even if the contents of other elements are within the range of the present embodiment. On the other hand, if the Cu content exceeds 0.45%, the weldability and hot workability of the steel will deteriorate even if the contents of other elements are within the range of the present embodiment. Therefore, the Cu content is to be 0.25 to 0.45%. A preferred lower limit of the Cu content is 0.26%, more preferably 0.27%. A preferred upper limit of the Cu content is 0.40%, more preferably 0.38%, even more preferably 0.36%.

### Ni: 0.50% or less

Nickel (Ni) is unavoidably contained; that is, the Ni content is more than 0%. Ni enhances the hydrochloric acid corrosion resistance of the steel. If even a small amount of Ni is contained, this effect can be obtained to some extent. However, if the Ni content exceeds 0.50%, the weldability and hot workability of the steel will deteriorate. Therefore, the Ni content is to be 0.50% or less. An excessive reduction of the Ni content increases manufacturing costs. Therefore, when industrial production is considered, a preferred lower limit of the Ni content is 0.01%, and more preferably 0.02%. Considering further effective enhancement of hydrochloric acid corrosion resistance, a preferred lower limit of the Ni content is 0.05%, and even more preferably 0.10%. A preferred upper limit of the Ni content is 0.44%, and more preferably 0.40%, and even more preferably 0.35%.

### Mo: 0.20% or less

Molybdenum (Mo) is unavoidably contained; that is, the Mo content is more than 0%. Mo enhances the sulfuric acid corrosion resistance of the steel. Even a small amount of Mo content can have this effect to some extent. On the other hand, if the Mo content exceeds 0.20%, the corrosion resistance of the steel decreases. Therefore, the Mo content is to be 0.20% or less. An excessive reduction of the Mo content increases manufacturing costs. Therefore, a preferred lower limit of the Mo content is 0.001%, and even more preferably 0.005%. For further increasing sulfuric acid corrosion resistance, a preferred lower limit of the Mo content is 0.01%, more preferably 0.02%, and even more preferably 0.03%. A preferred upper limit of the Mo content is 0.19%, more preferably 0.18%, and even more preferably 0.17%.

### Sb: 0.05 to 0.15%.

Antimony (Sb) increases the sulfuric acid corrosion resistance of the steel. If the Sb content is less than 0.05%, sufficient sulfuric acid corrosion resistance cannot be obtained even if the contents of other elements are within the range of the present embodiment. On the other hand, if the Sb content exceeds 0.15%, the hot workability and weldability of the steel will deteriorate even if the contents of other elements are within the range of the present embodiment. Therefore, the Sb content is set at 0.05 to 0.15%. A preferred lower limit of the Sb content is 0.06%, more preferably 0.07%, and even more preferably 0.08%. A preferred upper limit of the Sb content is 0.14%, more preferably 0.13%.

In the chemical composition of the seamless steel pipe of the present embodiment, the balance is Fe and impurities. The term "impurities" herein means components that are mixed in during the industrial manufacturing of steel due to raw materials such as ores, scrap, and other factors, and are acceptable to the extent that they do not adversely affect the seamless steel pipe of the present invention.

The chemical composition of the seamless steel pipe of the present embodiment may further contain, in lieu of a part of the Fe, one or more types selected from the group consisting of Al: 0.050% or less, Cr: 0.70% or less, Nb: 0.100% or less, Ta: 0.100% or less, V: 0.100% or less, Ti: 0.100% or less, and W: 1.00% or less. Al may be added as a deoxidizer. All of the above elements except Al increase high-temperature strength of the steel.

### Al: 0.050% or less

Aluminum (Al) is an optional element and need not be contained; that is, the Al content can be 0%. If Al is contained, it acts as a deoxidizing agent. Even a small amount of Al will have some of the above effects. However, if Al is contained in excess, corrosion resistance is impaired due to an increase in inclusions. Therefore, the Al content is to be 0.050% or less. The Al content is preferably 0.005% or more, more preferably 0.010% or more, and even more preferably 0.020% or more. The Al content is preferably 0.045% or less, and more preferably 0.040% or less.

### Cr: 0.70% or less

Chromium (Cr) is an optional element and need not be contained; that is, the Cr content can be 0%. If Cr is contained, Cr improves strength by increasing hardenability. If even a small amount of Cr is contained, the above effect can be obtained to some extent. However, although Cr is an element that increases weather resistance, it may decrease corrosion resistance in acid corrosive environments. Therefore, the Cr content is to be 0.70% or less. The Cr content is preferably 0.01% or more, more preferably 0.02% or more, and even more preferably 0.05% or more. The Cr content is preferably 0.50% or less, more preferably 0.30% or less, and even more preferably 0.10% or less.

### Nb: 0.100% or less

Niobium (Nb) is an optional element and need not be contained; that is, the Nb content can be 0%. If Nb is contained, it forms carbides or carbonitrides in the steel and increases the high-temperature strength of the seamless steel pipe. If even a small amount of Nb is contained, the above effect can be obtained to some extent. However, if the Nb content is too high, the effect is saturated. Therefore, the Nb content is 0.100% or less. A preferred lower limit of the Nb content is more than 0%, more preferably 0.005%, and even more preferably 0.010%. A preferred upper limit of the Nb content is 0.090%, and more preferably 0.080%.

### Ta: 0.100% or less

Tantalum (Ta) is an optional element and need not be contained; that is, the Ta content can be 0%. If Ta is contained, it forms carbides or carbonitrides in the steel and increases the high-temperature strength of the seamless steel pipe. If even a small amount of Ta is contained, the above effect can be obtained to some extent. However, if the Ta content is too high, the effect is saturated. Therefore, the Ta content is to be 0.100% or less. A preferred lower limit of the Ta content is more than 0%, more preferably 0.005%, and even more preferably 0.010%. A preferred upper limit of the Ta content is 0.090%, and even more preferably 0.080%.

### V: 0.100 % or less

Vanadium (V) is an optional element and need not be contained; that is, the V content can be 0%. If V is contained, it forms carbides or carbonitrides in the steel and increases the high-temperature strength of the seamless steel pipe. If even a small amount of V is contained, the above effect can be obtained to some extent. However, if the V content is too high, the effect is saturated. Therefore, the V content is to be 0.100% or less. A preferred lower limit of the V content is more than 0%, more preferably 0.005%, and even more preferably 0.010%. A preferred upper limit of the V content is 0.090%, and more preferably 0.080%.

### Ti: 0.100% or less

Titanium (Ti) is an optional element and need not be contained; that is, the Ti content can be 0%. If Ti is contained, it forms carbides or carbonitrides in the steel and increases the high-temperature strength of the seamless steel pipe. If even a small amount of Ti is contained, the above effect can be obtained to some extent. However, if the Ti content is too high, the effect is saturated. Therefore, the Ti content is to be 0.100% or less. A preferred lower limit of the Ti content is more than 0%, more preferably 0.005%, and even more preferably 0.010%. A preferred upper limit of the Ti content is 0.090%, and more preferably 0.080%.

### W: 1.00% or less

Tungsten (W) is an optional element and need not be contained; that is, the W content can be 0%. If W is contained, W increases the high-temperature strength of the seamless steel pipe. If even a small amount of W is contained, the above effect can be obtained to some extent. However, if the W content is too high, the effect is saturated. Therefore, the W content is to be 1.00% or less. A preferred lower limit of the W content is more than 0%, more preferably 0.05%, and even more preferably 0.10%. A preferred upper limit of the W content is 0.90%, and more preferably 0.80%.

The chemical composition of the seamless steel pipe of the present embodiment may further contain, in lieu of a part of the Fe, one or more types selected from the group consisting of Ca: 0.0100% or less, Mg: 0.0100% or less, REM: 0.0100% or less, and B: 0.0050% or less. All of these elements enhance the cleanliness of the steel.

### Ca: 0.0100% or less

Calcium (Ca) is an optional element and need not be contained; that is, the Ca content can be 0%. If Ca is contained, it enhances the cleanliness of the steel while suppressing a decrease in sulfuric acid corrosion resistance. If even a small amount of Ca is contained, the above effect is obtained to some extent. However, if the Ca content is too high, the effect is saturated. Therefore, the Ca content is to be 0.0100% or less. A preferred lower limit of the Ca content is more than 0%, more preferably 0.0002%, and even more preferably 0.0010%. A preferred upper limit of the Ca content is 0.0090%, and more preferably 0.0080%.

### Mg: 0.0100% or less

Magnesium (Mg) is an optional element and need not be contained; that is, the Mg content can be 0%. If Mg is contained, it enhances the cleanliness of the steel while suppressing the decrease in sulfuric acid corrosion resistance. If even a small amount of Mg is contained, the above effect is obtained to some extent. However, if the Mg content is too high, the effect is saturated. Therefore, the Mg content is to be 0.0100% or less. A preferred lower limit of the Mg content is more than 0%, more preferably 0.0002%, and even more preferably 0.0010%. A preferred upper limit of the Mg content is 0.0090%, and even more preferably 0.0080%.

### REM: 0.0100% or less

Rare earth elements (REM) are optional elements and need not be contained; that is, the REM content can be 0%. If REM is contained, it enhances the cleanliness of the steel while suppressing the decrease in sulfuric acid corrosion resistance. If even a small amount of REM is contained, the above effect is obtained to some extent. However, if the REM content is too high, the effect is saturated. Therefore, the REM content is 0.0100% or less. A preferred lower limit of the REM content is more than 0%, more preferably 0.0002%, and even more preferably 0.0010%. A preferred upper limit of the REM content is 0.0090%, and more preferably 0.0080%.

Here, the term "REM" is a generic term for a total of 17 elements of Sc, Y and lanthanides, and the term "REM content" means the total content of the above elements. Lanthanides are industrially added in the form of misch metal.

### B: 0.0050% or less

Boron (B) is an optional element and need not be contained; that is, the B content can be 0%. If B is contained, it enhances the cleanliness of the steel without reducing the sulfuric acid corrosion resistance. If even a small amount of B is contained, the above effect can be obtained to some extent. However, if the B content is too high, the effect is saturated. Therefore, the B content is to be 0.0050% or less. A preferred lower limit of the B content is more than 0%, more preferably 0.0002%, and even more preferably 0.0010%. A preferred upper limit of the B content is 0.0040%, and more preferably 0.0030%.

The chemical composition of the seamless steel pipe of the present embodiment may further contain one or more types selected from the group consisting of Sn: 0.30% or less, and Pb: 0.30% or less, in lieu of a part of the Fe. All of these elements improve the machinability of the steel.

### Sn: 0.30% or less

Tin (Sn) is an optional element and need not be contained; that is, the Sn content can be 0%. If Sn is contained, the machinability of the steel is improved. If even a small amount of Sn is contained, the above effect is obtained to some extent. However, if the Sn content is too high, the hot workability of the steel will decrease. Therefore, the Sn content is 0.30% or less. A preferred lower limit of the Sn content is more than 0%, more preferably 0.01%, and even more preferably 0.10%. A preferred upper limit of the Sn content is 0.25%, and even more preferably 0.20%.

### Pb: 0.30% or less

Lead (Pb) is an optional element and need not be contained; that is, the Pb content can be 0%. If Pb is contained, the machinability of the steel is enhanced. If even a small amount of Pb is contained, the above effect can be obtained to some extent. However, if the Pb content is too high, the hot workability of the steel is reduced. Therefore, the Pb content is to be 0.30% or less. A preferred lower limit of the Pb content is more than 0%, more preferably 0.01%, and even more preferably 0.10%. A preferred upper limit of the Pb content is 0.25%, and more preferably 0.20%.

The chemical composition of the seamless steel pipe of the present embodiment may further contain one or more types selected from the group consisting of Se: 0.100% or less, Te: 0.100% or less, Bi: 0.100% or less, in lieu of a part of the Fe. All of these elements increase the acid resistance of the steel.

### Se: 0.100% or less

Selenium (Se) is an optional element and need not be contained; that is, the Se content can be 0%. If Se is contained, the acid resistance of the steel is enhanced. If even a small amount of Se is contained, the above effect can be obtained to some extent. However, if the Se content is too high, the manufacturability may decrease, and the manufacturing costs may increase. Therefore, the Se content is 0.100% or less. A preferred lower limit of the Se content is more than 0%, more preferably 0.001%, and even more preferably 0.010%. A preferred upper limit of the Se content is 0.090%, more preferably 0.080%, and even more preferably 0.070%.

### Te: 0.100 % or less

Tellurium (Te) is an optional element and need not be contained; that is, the Te content can be 0%. If Te is contained, the acid resistance of the steel is enhanced. If even a small amount of Te is contained, the above effect can be obtained to some extent. However, if the Te content is too high, the manufacturability may decrease, and the manufacturing costs may increase. Therefore, the Te content is 0.100% or less. A preferred lower limit of the Te content is more than 0%, more preferably 0.001%, and even more preferably 0.010%. A preferred upper limit of the Te content is 0.090%, more preferably 0.080%, and more preferably 0.070%.

### Bi: 0.100% or less

Bismuth (Bi) is an optional element and need not be contained; that is, the Bi content can be 0%. If Bi is contained, the acid resistance of the steel is increased. If even a small amount of Bi is contained, the above effect is obtained to some extent. However, if the Bi content is too high, the manufacturability may decrease, and the manufacturing costs may increase. Therefore, the Bi content is 0.100% or less. A preferred lower limit of the Bi content is more than 0%, more preferably 0.001%, and even more preferably 0.010%. A preferred upper limit of the Bi content is 0.090%, more preferably 0.080%, and even more preferably 0.070%.

The chemical composition of the seamless steel pipe of the present embodiment may further contain one or more types selected from the group consisting of Ag: 0.500% or less, and Pd: 0.100% or less, in lieu of a part of the Fe. All of these elements increase sulfuric acid corrosion resistance at high temperatures.

### Ag: 0.500% or less

Silver (Ag) is an optional element and need not be contained; that is, the Ag content can be 0%. If Ag is contained, the sulfuric acid corrosion resistance of the steel at high temperatures is enhanced. If even a small amount of Ag is contained, the above effect can be obtained to some extent. However, if the Ag content is too high, the hot workability of the steel will decrease. Therefore, the Ag content is 0.500% or less. A preferred lower limit of the Ag content is more than 0%, more preferably 0.001%, and even more preferably 0.010%. A preferred upper limit of the Ag content is 0.400%, more preferably 0.250%, and even more preferably 0.100%.

### Pd: 0.100% or less

Palladium (Pd) is an optional element and need not be contained; that is, the Pd content can be 0%. If Pd is contained, the sulfuric acid corrosion resistance of the steel at high temperatures is enhanced; even a small amount of Pd can have some of the above effects. However, if the Pd content is too high, the hot workability of the steel is reduced. Therefore, the Pd content is 0.100% or less. A preferred lower limit of the Pd content is more than 0%, more preferably 0.001%, and even more preferably 0.010%. A preferred upper limit of the Pd content is 0.090%, more preferably 0.080%, and even more preferably 0.070%.

### (B) Metallographic Structure

In the metallographic structure of the seamless steel pipe of the present embodiment, the area fraction of ferrite is 90.0% or more. In the metallographic structure, the remaining portion other than ferrite is pearlite; that is, the metallographic structure (matrix: base phase) of the seamless steel pipe of the present embodiment is composed of ferrite and pearlite. If the area fraction of ferrite is less than 90.0% in the metallographic structure of the seamless steel pipe of the present embodiment, stress corrosion cracking is likely to occur. If the area fraction of ferrite is 90.0% or more, stress corrosion cracking is less likely to occur. Therefore, the area fraction of ferrite is to be 90.0% or more. A preferred lower limit of the ferrite area fraction is 92.0%, and more preferably 95.0%.

The area fraction of ferrite is measured by the following method. A sample is taken from the center of the wall thickness of the seamless steel pipe. The size of the sample is not particularly limited as long as a field of view for metallographic structure observation described below is ensured. The cross-section of the surface of the sample perpendicular to the longitudinal direction of the seamless steel pipe is used as the observation surface. Mirror polishing is performed on the observed surface. After mirror polishing, the sample is immersed in a Nital corrosion solution to reveal the micro-structure by etching. The etched surface is observed by secondary electron image using a scanning electron microscope (SEM) with a field of view of about 200 × 200 µm² per field of view (500× magnification). In each field of view, the micro-structure (ferrite, pearlite, etc.) is identified from the contrast. The arithmetic mean of the area fraction of ferrite identified in each field of view (total of 5 fields of view) is defined as the area fraction of ferrite (%).

Furthermore, in the metallographic structure of the seamless steel pipe of the present embodiment, the average grain size of ferrite in the inner surface layer of the pipe is 3.0 to 20.0 µm, and the average grain size of ferrite in the outer surface layer of the pipe is 3.0 to 25.0 µm.

As mentioned above, the larger the grain size, the better the corrosion resistance in the steels that exhibit corrosion resistance by containing Cu and Sb. When the crystal grains are refined, the crystal grain boundary area increases, and Sb, which is a segregation element, segregates/disperses at the grain boundaries, and the location of Sb, which is effective for sulfuric acid corrosion resistance, becomes the crystal grain boundaries. Since Cu, another element effective for corrosion resistance, exists within the grain, the combined effect of Cu and Sb for corrosion resistance is difficult to obtain if Sb is segregated at the grain boundaries. Therefore, the average grain size of ferrite is to be 3.0 µm or larger on both the inner and outer surface layers of the pipe.

On the other hand, if the crystal grains are excessively coarse, the required strength as a structure cannot be obtained, so it is necessary to set an upper limit for the average crystal grain size of ferrite.

The seamless steel pipe of the present embodiment may be a steel pipe as-rolled (hot-rolled finished material) or cold-worked afterwards (cold-rolled finished material).

The average grain size of the ferrite in the seamless steel pipe is measured by the following method. Samples are taken from the surface layer of the inner surface and the surface layer of the outer surface of the seamless steel pipe, respectively. The term "surface layer" means the area from the inner and outer surfaces to a depth of 2.0 mm, respectively. The collected sample is embedded in resin, and the surface of the sample is polished. The surface of the sample to be polished (observation surface) is to be a cross-section perpendicular to the longitudinal direction of the seamless steel pipe. After polishing the observation surface of the resin-embedded sample, the sample is immersed in a Nital corrosion solution to reveal the ferrite grain boundaries on the surface. In five optional fields of view of the corroded observation surface, the equivalent circle diameter of the ferrite in each field of view is determined, and the average value thereof is regarded as the average grain size.

### (C) Inclusions

The seamless steel pipe of the present embodiment contains MnS and MnS-oxide in the inner surface layer and outer surface layer of the pipe. The number density of MnS having a maximum length of 2.0 µm or more is less than 100/mm² in both the inner and outer surface layers. In addition, the ratio of the number density of MnS-oxide having a maximum length of 2.0 µm or more to the number density of MnS having a maximum length of 2.0 µm or more is 0.10 or more.

Since MnS having a maximum length of less than 2.0 µm has little effect on the corrosion resistance of the steel, inclusions having a maximum length of 2.0 µm or more shall be considered in the present invention. In the following description, MnS having a maximum length of 2.0 µm or more is simply referred to as MnS, and MnS-oxide having a maximum length of 2.0 µm or more is simply referred to as MnS-oxide.

As mentioned above, the formation of MnS is unavoidable in the seamless steel pipe of the present embodiment. However, MnS is the starting point of corrosion and degrades corrosion resistance in both sulfuric acid corrosion environments and high-temperature water environments. Therefore, it is necessary to limit the number density of MnS to less than 100/mm². The number density of MnS is preferably 90/mm² or less, and more preferably 80/mm² or less.

On the other hand, extreme reductions of Mn and S content are not desirable in the seamless steel pipe of the present embodiment from the viewpoint of improving strength, toughness, and corrosion resistance. **In** order to achieve all of these, it is necessary to detoxify MnS. When MnS combines with oxygen to form MnS-oxide, it is detoxified and is less likely to become a starting point for corrosion. Therefore, in the present invention, the ratio of the number density of MnS-oxide to the number density of MnS is to be 0.10 or more. The above ratio is preferably 0.12 or more, and more preferably 0.15 or more.

Here, as mentioned above, it is desirable to make the ferrite in the outer surface layer of the pipe relatively coarse-grained because better corrosion resistance may be required on the outer surface in the seamless steel pipe of the present embodiment. However, it is sometimes difficult to control the grain size of the outer surface in the manufacturing process of seamless steel pipe.

Therefore, from the viewpoint of ensuring corrosion resistance on the outer surface of the pipe even with relatively fine grains, it is preferred that the number density of MnS in the outer surface layer be less than 50/mm² and that the ratio of the number density of MnS-oxide to the number density of MnS be 0.50 or more.

The number density of MnS and the number density of MnS-oxide are measured by energy dispersive X-ray analysis (EDS) equipped in a scanning electron microscope (SEM). The measurement magnification is 1000×, and the maximum length of MnS and MnS-oxide detected in the field of view is measured. The number of inclusions having a maximum length of 2.0 µm or more are counted and divided by the area of the field of view to obtain the number density.

Inclusions are identified by EDS, and inclusions with a total content of Mn and S of 90 mass% or more are to be determined as MnS, and inclusions with O peaks detected and a total content of Mn, S and O of 90 mass% or more are to be determined as MnS-oxide.

### (D) Mechanical Properties

There is no particular restriction on the mechanical properties of the seamless steel pipe of the present embodiment. However, when used as a seamless steel pipe for applications in sulfuric acid corrosive environments, such as air preheater, gas-gas heater and the like in coal-fired power plant boiler, and air preheater/desulfurizer and the like in waste incineration facility, the tensile strength is preferably 380 MPa or more and the yield stress is preferably 230 MPa or more. A preferred lower limit of the tensile strength is 390 MPa, and more preferably 400 MPa. A preferred upper limit of the tensile strength is not particularly limited, but is 600 MPa, for example, and may be 580 MPa. A preferred lower limit of the yield stress is 240 MPa, and even more preferably 250 MPa. An upper limit of the yield stress is not particularly limited, for example, 450 MPa and may be 440 MPa.

### (E) Oxide Scale

When the seamless steel pipe is a hot-rolled finished material, it is preferable to have oxide scale on at least a part of the outer surface of the steel pipe base metal and an enriched layer of Si, Cu and Sb at the interface between the steel pipe base metal and the oxide scale. The presence of the enriched layer of these elements provides a barrier effect to sulfuric acid and hydrochloric acid, and further improves corrosion resistance in acid corrosive environments.

Here, the enriched layer of Si, Cu, and Sb is the one in which Si, Cu, and Sb in the steel diffuse with heat treatment and are enriched at the interface between the base metal and the oxide scale. Specifically, the enriched layer is defined as the area where the content of Si, Cu, and Sb is two or more times higher than that in the base metal by electron probe micro-analysis (EPMA) line analysis of the cross section perpendicular to the steel surface and including the interface between the base metal and the oxide scale. In the present invention, the measurement shall be performed under the following conditions: acceleration voltage: 15 kV, beam diameter: ~100 nm, irradiation time: 20 ms, and measurement pitch: 80 nm.

In addition, when Ni is contained in the base metal, it is preferable that the Ni-enriched layer is formed closer to the base metal side than the Si, Cu, Sb-enriched layer. By having the Ni-enriched layer, it is possible to further improve the corrosion resistance.

### (F) Applications

Although there are no particular restrictions on the uses of the seamless steel pipe of the present embodiment, it is suitable for use in environments where the outer surface is exposed to sulfuric acid corrosive environments and the inner surface is exposed to high temperature water. More specifically, the seamless steel pipe of the present embodiment is suitable for air preheater, gas-gas heater and the like in coal-fired power plant boiler, and air preheater/desulfurizer and the like in waste incineration facility.

### (G) Manufacturing Method

A manufacturing method for the seamless steel pipe of an embodiment of the present invention will be described. The present manufacturing method for seamless steel pipe includes a material preparation process, a hot working process, and a heat treatment process.

### [Material preparation process]

In the material preparation process, molten steel having the chemical composition described above is used to produce a material by the casting method. The material may be a slab or bloom produced by the continuous casting method using molten steel, or a round billet produced by the continuous casting method. The round billet is a billet with a circular cross section perpendicular to the longitudinal direction. The material may also be an ingot produced by an ingot-casting method using molten steel.

### [Hot working process]

In the hot working process, hot working is performed on the material produced by the casting method to produce seamless steel pipe.

For example, when the material is a bloom, slab, or ingot, the following hot working is performed to produce a seamless steel pipe. First, the material is heated in a heating furnace. The heating temperature is not particularly limited, but is, for example, 1000 to 1300°C. The heated material is subjected to blooming using a blooming mill to produce a round billet.

The round billet is then subjected to the Mannesmann method to produce a hollow shell. First, a scale modifier containing a silicon compound is applied to at least one end face of the round billet (the end face on the side to be pierced and rolled). Here, the scale modifier containing a Si compound is a mixture obtained by mixing oxides such as Al₂O₃, Fe₂O, CaO, MgO, Na₂O, K₂O, B₂O₃, and ZrO₂, as well as Si compounds, binders, water, and in some cases compounds such as CrB.

Si compounds include, for example, SiO₂ and SiC. In particular, it is preferable to use one that contains, by mass%, 50% or more SiO₂, or 15% or more SiC. By applying this scale modifier to the end face of the round billet, the scale modifier is applied to the inner surface of the hollow shell during piercing-rolling. As a result, the processing heat generated by the piercing-rolling and the formation of scale are suppressed, and cooling is promoted on the inner surface side of the steel pipe, enabling MnS to be refined.

In addition, several types selected from oxides such as Al₂O₃, Fe₂O, CaO, MgO, Na₂O, K₂O, B₂O₃, ZrO₂, and compounds of C and B, and the like, are mixed with Si compounds and mixed into the scale modifier in the form of glass frit. The mixing ratio of these may be adjusted so that the viscosity of the scale modifier is in an appropriate range when heated before piercing-rolling. In order to improve working efficiency during application, it is also preferable to adjust the mixing ratio of the glass frit to the binder and water so that the viscosity of the scale modifier at room temperature is also in an appropriate range.

There are no restrictions on the method of application of this scale modifier, but it can be applied, for example, by spraying or brushing on at least one end surface of the steel at room temperature. The application amount of scale modifier is preferably, for example, 50 to 100 mg/cm².

The round billet applied with scale modifier is then heated in a furnace. The heating temperature is 1170 to 1300°C. Then, the round billets are taken out of the heating furnace, and the taken out round billets are subjected to piercing-rolling by a piercer to produce the hollow shell. After piercing-rolling, the hollow shell can be further subjected to elongation rolling by a mandrel mill.

In addition, sizing using a sizer or a stretch reducer may also be performed on the hollow shell that have been reheated after elongation rolling (hot working) using a mandrel mill.

The produced hollow shell is cooled, for example by air cooling. Through the above hot working, a seamless steel pipe is produced.

When the material prepared in the material preparation process is a round billet, the above-mentioned blooming step is omitted. That is, the Mannesmann method is performed on the prepared material (round billet) to produce hollow shells. The hollow shells are cooled and made into seamless steel pipes.

### [Heat treatment process]

**In** the manufacturing method for seamless steel pipes of the present embodiment, heat treatment after pipe manufacturing may be omitted, but heat treatment may be performed as necessary for reasons such as stability of mechanical properties and other qualities.

**In** heat treatment, the heat treatment temperature is set at the Ac₃ transformation point or higher. The heat treatment temperature in heat treatment is, for example, 900°C or higher, and more preferably 900 to 920°C. The holding time at the above heat treatment temperature is not particularly limited, but is, for example, 5 to 10 minutes. The average grain size of the ferrite is adjusted by the heat treatment temperature and the holding time in the heat treatment. After the holding time at the above heat treatment temperature has elapsed, the seamless steel pipe is formed using a stretch reducer. When producing a cold-rolled finished product, cold working is performed after forming in a stretch reducer, and then heat treatment is performed again.

Controlled cooling after heat treatment after hot working and reheat treatment after cold working affects corrosion resistance. Increasing the cooling rate after heat treatment and reheat treatment improves corrosion resistance. Although the detailed mechanism is unclear, it is believed that increasing the cooling rate suppresses the segregation of Sb at grain boundaries during cooling and ensures the Sb concentration in the grains that contributes to corrosion resistance. Therefore, a faster cooling rate is better. It is preferable to set the cooling rate from the heat treatment temperature to 500°C to 15.0°C/min or more, and more preferably 20.0°C/min or more.

The present invention will be described in more detail below with reference to examples. Note that the conditions in the examples shown below are examples of conditions adopted to confirm the feasibility and effects of the present invention, and the present invention is not limited to these examples. In addition, various conditions may be adopted in the present invention as long as they do not deviate from the gist of the present invention and achieve the object of the present invention.

### EXAMPLE

Steels with the chemical compositions shown in Table 1 were melted and round billets were produced by the continuous casting method. The round billets were heated to 1200 to 1250°C in a furnace. The heated round billets were then subjected to piercing-rolling using a piercing mill to produce hollow shells. In this process, a scale modifier containing a Si compound was applied to the end face of the side to be pierced and rolled, except for Test Nos. 24 and 25. A mixture containing SiO₂: 50.0%, Al₂O₃: 24.0%, and B₂O₃: 11.9% was used as the scale modifier.

In addition, elongation rolling using a mandrel mill and sizing using a stretch reducer or sizer were performed on the hollow shells, followed by cold working and heat treatment. For Test Nos. 22 and 23, the heat treatment was performed after pipe making (sizing) without cold working. The seamless steel pipes shown in Table 2 were manufactured.

### [Table 1]

**Table 1**

| Steel | Chemical composition (mass%, balance: Fe and impurities) | | | | | | | | | | | |
|---|---|---|---|---|---|---|---|---|---|---|---|---|
| | C | Si | Mn | P | S | N | O | Cu | Ni | Mo | Sb | Other element |
| 1 | 0.04 | 0.20 | 1.11 | 0.009 | 0.010 | 0.003 | 0.0014 | 0.30 | 0.20 | 0.05 | 0.10 | - |
| 2 | 0.04 | 0.22 | 1.10 | 0.009 | 0.008 | 0.003 | 0.0015 | 0.27 | 0.17 | 0.05 | 0.09 | - |
| 3 | 0.03 | 0.25 | 1.40 | 0.006 | 0.014 | 0.003 | 0.0015 | 0.29 | 0.20 | 0.04 | 0.12 | - |
| 4 | 0.04 | 0.30 | 0.90 | 0.009 | 0.010 | 0.003 | 0.0020 | 0.30 | 0.16 | 0.05 | 0.10 | Cr:0.06 |
| 5 | 0.03 | 0.30 | 1.11 | 0.009 | 0.008 | 0.003 | 0.0014 | 0.27 | 0.16 | 0.20 | 0.10 | Al:0.017 |
| 6 | 0.05 | 0.20 | 1.10 | 0.006 | 0.014 | 0.003 | 0.0015 | 0.29 | 0.20 | 0.05 | 0.09 | Al:0.031 |
| 7 | 0.04 | 0.22 | 1.12 | 0.009 | 0.010 | 0.003 | 0.0015 | 0.30 | 0.17 | 0.04 | 0.12 | Ca:0.0021,Sn:0.002 |
| 8 | 0.04 | 0.25 | 0.90 | 0.009 | 0.008 | 0.003 | 0.0014 | 0.27 | 0.20 | 0.04 | 0.12 | Cr:0. 15 |
| 9 | 0.03 | 0.30 | 0.90 | 0.006 | 0.014 | 0.003 | 0.0015 | 0.29 | 0.16 | 0.04 | 0.12 | Cr:0.01 |
| 10 | 0.04 | 0.30 | 1.11 | 0.009 | 0.008 | 0.003 | 0.0015 | 0.27 | 0.20 | 0.05 | 0.10 | Al:0.050,W:0.06 |
| 11 | 0.03 | 0.20 | 1.11 | 0.006 | 0.014 | 0.003 | 0.0020 | 0.29 | 0.20 | 0.05 | 0.10 | W:0.10 |
| 12 | 0.03 | 0.20 | 1.11 | 0.009 | 0.009 | 0.003 | 0.0020 | 0.27 | 0.20 | 0.05 | 0.09 | Ta:0.03 |
| 13 | 0.04 | 0.22 | 1.10 | 0.006 | 0.014 | 0.003 | 0.0014 | 0.29 | 0.20 | 0.04 | 0.12 | V:0.08 |
| 14 | 0.04 | 0.25 | 1.12 | 0.009 | 0.010 | 0.003 | 0.0015 | 0.30 | 0.17 | 0.04 | 0.12 | Cr:0.50,Ti:0.03 |
| 15 | 0.05 | 0.25 | 0.90 | 0.006 | 0.014 | 0.003 | 0.0015 | 0.29 | 0.16 | 0.04 | 0.12 | B:0.002,Sn:0.002,Pb:0.002, Te:0.002,Bi:0.002 |
| 16 | 0.04 | 0.22 | 1.10 | 0.009 | 0.010 | 0.003 | 0.0014 | 0.30 | 0.17 | 0.05 | 0.09 | Mg:0.005,Se:0.002,Ag:0.002 |
| 17 | 0.04 | 0.20 | 1.10 | 0.009 | 0.010 | 0.003 | 0.0015 | 0.30 | 0.20 | 0.05 | 0.10 | Nb:0.04 |
| 18 | 0.03 | 0.25 | 1.12 | 0.009 | 0.008 | 0.003 | 0.0015 | 0.27 | 0.20 | 0.04 | 0.12 | REM:0.008,Pd:0.002 |

### [Table 2]

**Table 2**

| Test No. | Steel | Scale modifier | Heat treatment | | | Cold working | Micro-structure | Average grain size (µm) | | Number density of MnS (/mm²) | | Ratio of number density (MnS-oxide/MnS) | | Result of sulfuric acid corrosion test | |
|---|---|---|---|---|---|---|---|---|---|---|---|---|---|---|---|
| | | | Temperature (°C) | Holding time (min) | Cooling rate (°C/min) | | | | | | | | | | |
| | | | | | | | | Inner surface layer | Outer surface layer | Inner surface layer | Outer surface layer | Inner surface layer | Outer surface layer | | |
| 1 | 1 | Present | 900 | 5 | 16.1 | Performed | F | 12.0 | 106 | 66 | 51 | 0.20 | 0.30 | ⊙ | |
| 2 | 2 | Present | 900 | 5 | 16.1 | Performed | F | 10.2 | 12.1 | 73 | 56 | 0.21 | 0.32 | ⊙ | |
| 3 | 3 | Present | 920 | 5 | 16.1 | Performed | F | 15.0 | 13.3 | 99 | 74 | 0.22 | 0.33 | ⊙ | |
| 4 | 4 | Present | 900 | 5 | 16.1 | Performed | F | 14.4 | 12.7 | 33 | 26 | 0.24 | 0.36 | ⊙ | |
| 5 | 5 | Present | 900 | 5 | 16.1 | Performed | F | 15.6 | 13.8 | 46 | 36 | 0.20 | 0.30 | ⊙ | |
| 6 | 6 | Present | 900 | 5 | 16.1 | Performed | F | 16.8 | 14.8 | 53 | 41 | 0.20 | 0.30 | ○ | |
| 7 | 7 | Present | 900 | 5 | 16.1 | Performed | F | 13.2 | 11.7 | 26 | 20 | 0.26 | 0.39 | ⊙ | |
| 8 | 8 | Present | 900 | 5 | 16.1 | Performed | F | 15.6 | 13.8 | 86 | 66 | 0.28 | 0.42 | ○ | |
| 9 | 9 | Present | 900 | 5 | 16.1 | Performed | F | 19.9 | 17.5 | 92 | 71 | 0.32 | 0.48 | ○ | |
| 10 | 10 | Present | 900 | 5 | 16.1 | Performed | F | 14.9 | 13.1 | 96 | 74 | 0.36 | 0.54 | ○ | Inventive example |
| 11 | 11 | Present | 900 | 5 | 16.1 | Performed | F | 13.2 | 11.7 | 53 | 41 | 0.24 | 0.36 | ⊙ | |
| 12 | 12 | Present | 900 | 5 | 25.0 | Performed | F | 5.1 | 5.2 | 50 | 38 | 0.50 | 0.75 | ○ | |
| 13 | 13 | Present | 900 | 5 | 16.1 | Performed | F | 16.8 | 14.8 | 73 | 56 | 0.52 | 0.78 | ○ | |
| 14 | 14 | Present | 900 | 5 | 16.1 | Performed | F | 19.0 | 15.9 | 76 | 59 | 0.26 | 0.39 | ○ | |
| 15 | 15 | Present | 900 | 5 | 16.1 | Performed | F | 15.6 | 13.8 | 50 | 38 | 0.48 | 0.72 | ○ | |
| 16 | 16 | Present | 900 | 5 | 16.1 | Performed | F | 14.4 | 12.7 | 73 | 56 | 0.36 | 0.54 | ○ | |
| 17 | 17 | Present | 900 | 5 | 16.1 | Performed | F | 19.0 | 19.0 | 59 | 46 | 0.46 | 0.69 | ○ | |
| 18 | 18 | Present | 900 | 5 | 16.1 | Performed | F | 19.9 | 25.0 | 53 | 41 | 0.40 | 0.60 | ○ | |
| 19 | 1 | Present | 900 | 5 | 15.0 | Not performed | F | 10.7 | 9.5 | 53 | 41 | 0.20 | 0.20 | ⊙ | |
| 20 | 2 | Present | 900 | 5 | 15.0 | Not performed | F | 9.1 | 7.7 | 59 | 46 | 0.20 | 0.20 | ⊙ | |
| 21 | 1 | Absent | 900 | 5 | 16.1 | Performed | F | 23.5 | 22.0 | 106 | 66 | 0.08 | 0.24 | × | Comparative example |
| 22 | 3 | Absent | 900 | 5 | 16.1 | Performed | F | 22.8 | 17.4 | 136 | 104 | 0.09 | 0.09 | × | |

The obtained steel pipes were subjected to various performance evaluation tests as follows.

### [Micro-structure observation test]

Samples were taken from the center of the wall thickness of the seamless steel pipe of each test number. The surface of the sample, which was perpendicular to the longitudinal direction of the seamless steel pipe, was used as the observation surface. Mirror polishing was performed on the observed surface. After mirror polishing, the sample was immersed in a Nital corrosion solution to reveal the micro-structure by etching. The etched observation surface was observed by secondary electron image using SEM, with a field of view of approximately 400 µm² per field of view (magnification of 5000×), and five fields of view were observed. In each field of view, the phases (ferrite and pearlite) were identified from the contrast. The arithmetic mean of the area percentage of ferrite identified in each field of view (total of 5 fields of view) was defined as the area fraction of ferrite (%).

The results obtained are shown in Table 2. "F" in the "Micro-structure" column of Table 2 means that the ferrite area fraction is 90.0% or more, and the remainder is pearlite. As shown in Table 2, in all cases, the micro-structure consisted of ferrite and pearlite with a ferrite area fraction of 90.0% or more.

Test Nos. 22 and 23 were hot-rolled finished products that had been as-hot-worked, and an oxide scale had formed on the steel surface. A Si, Cu, and Sb-enriched layer, and a Ni-enriched layer had been formed at the scale/steel sheet interface, and the Ni-enriched layer had been formed closer to the base metal side than the Si, Cu, and Sb-enriched layer.

### [Ferrite grain size measurement]

The ferrite grain size was measured from the cross-sectional micro-structure of the seamless steel pipe of each test number. Samples were cut from the steel pipe, embedded in resin, and polished. The surface of the sample to be polished (observation surface) was the cross section perpendicular to the longitudinal direction of the seamless steel pipe. After polishing the observation surface of the resin-embedded sample, the sample was immersed in a Nital corrosion solution to reveal the ferrite grain boundaries on the surface. In optional five fields of view of the corroded observation surface, the grain size of ferrite in each field was determined. The area of each field of view was 200 × 200 µm² from the inner and outer surfaces of the steel pipe to a depth of 40 µm, respectively. The average of the grain diameters evaluated in each of the five fields of view on the inner and outer surfaces of the pipe was defined as the grain size of the ferrite crystal grains.

### [Sulfuric acid corrosion test]

Arc-shaped coupon test specimens were taken from each test number of seamless steel pipe, including the inner and outer surfaces of the pipe. The width of the coupon test specimen was 10 mm, the thickness was the thickness of the steel pipe, and the length was 40 mm.

The two coupon test specimens thus prepared were used to carry out the "6-hour sulfuric acid corrosion test" shown below. In the 6-hour sulfuric acid corrosion test, a 50% by mass sulfuric acid solution was prepared using special grade sulfuric acid (density approximately 1.84) specified in JIS K 8951 and distilled water. The coupon test specimen was immersed in the sulfuric acid solution at 70°C for 6 hours under atmospheric pressure. The specific liquid volume was 22.7 cm³/cm². After 6 hours, the coupon test specimen was removed from the sulfuric acid solution, washed with water, and dried. After removing the corrosion products from the surface of the dried coupon test specimen, the mass of the test specimen was measured to determine the corrosion weight loss.

Based on the weight loss obtained, the corrosion rate (mg·cm⁻²·h⁻¹) was determined, and the average value of two coupon test specimens was defined as the corrosion rate (mg·cm⁻²·h⁻¹) in the 6-hour sulfuric acid corrosion test for that test number. In Table 2, ⊙ is defined as a corrosion rate of 20 mg·cm⁻² h⁻¹ or less, ∘ is defined as a corrosion rate exceeding 20 mg·cm⁻² h⁻¹and 30 mg·cm⁻²·h⁻¹ or less, Δ is defined as a corrosion rate exceeding 30 mg·cm⁻²·h⁻¹ and 50 mg·cm⁻²·h⁻¹ or less, and the case where the value exceeds 50 mg·cm⁻²·h⁻¹ is designated as ×.

### INDUSTRIAL APPLICABILITY

According to the present invention, it is possible to provide seamless steel pipe with excellent corrosion resistance in environments where the outer surface is exposed to sulfuric acid corrosive environments and the inner surface is exposed to high temperature water. Therefore, the seamless steel pipe of the present invention is suitable for air preheater, gas-gas heater and the like in coal-fired power plant boiler, and air preheater/desulfurizer and the like in waste incineration facility.

## Claims

1. A seamless steel pipe having an inner surface and an outer surface; having a chemical composition comprising, by mass%,
C: 0.06% or less,
Si: 0.55% or less,
Mn: 0.70 to 1.40%,
P: 0.020% or less,
S: 0.0005 to 0.020%,
N: 0.005% or less,
O: 0.0005 to 0.0035%,
Cu: 0.25 to 0.45%,
Ni: 0.50% or less,
Mo: 0.20% or less, and
Sb: 0.05 to 0.15%,
with the balance being Fe and impurities; and
having a metallographic structure including, by area%,
ferrite: 90% or more,
wherein the ferrite has an average grain size of 3.0 to 20.0 µm in the inner surface layer of the pipe and has an average grain size of 3.0 to 25.0 µm in the outer surface layer of the pipe, and
wherein:
the inner surface layer of the pipe contains MnS and MnS-oxide, the number density of MnS having a maximum length of 2.0 µm or more is less than 100/mm², and the ratio of the number density of MnS-oxide having a maximum length of 2.0 µm or more to the number density of MnS having a maximum length of 2.0 µm or more is 0.10 or more; and
the outer surface layer of the pipe contains MnS and MnS-oxide, the number density of MnS having a maximum length of 2.0 µm or more is less than 100/mm², and the ratio of the number density of MnS-oxide having a maximum length of 2.0 µm or more to the number density of MnS having a maximum length of 2.0 µm or more is 0.10 or more.

2. The seamless steel pipe according to claim 1,
wherein the chemical composition further contains, in lieu of a part of the Fe, one or more types selected from, by mass%:
Al: 0.050% or less,
Cr: 0.70% or less,
Nb: 0.100% or less,
Ta: 0.100% or less,
V: 0.100% or less,
Ti: 0.100% or less,
W: 1.00% or less,
Ca: 0.0100% or less,
Mg: 0.0100% or less,
REM: 0.0100% or less,
B: 0.0050% or less,
Sn: 0.30% or less,
Pb: 0.30% or less,
Se: 0.100% or less,
Te: 0.100% or less,
Bi: 0.100% or less,
Ag: 0.500% or less, and
Pd: 0.100% or less.

3. The seamless steel pipe according to claim 1 or 2,
wherein, in the outer surface layer of the pipe, the number density of MnS having a maximum length of 2.0 µm or more is less than 50/mm², and the ratio of the number density of MnS-oxide having a maximum length of 2.0 µm or more to the number density of MnS having a maximum length of 2.0 µm or more is 0.50 or more.
